# EUROPÄISCHE PATENTSCHRIFT

(11) **EP 1 039 443 B1**
(45) Veröffentlichungstag und Bekanntmachung des Hinweises auf die Patenterteilung: **26.01.2005**
(21) Anmeldenummer: 00104776.0
(22) Anmeldetag: 06.03.2000
(51) Int. Cl.: G10K 11/172, B60R 13/08

(54) **Luftschallabsorbierendes Formteil mit Resonanz-Doppelkammern**
Air-conducted sound absorbing element with double resonant chambers
Element absorbant le son transmis par l'air, avec double chambres de résonance

(30) Priorität: 10.03.1999 DE 19910595
(43) Veröffentlichungstag der Anmeldung: 27.09.2000
(73) Patentinhaber: Volkswagen Aktiengesellschaft, 38436 Wolfsburg (DE)
(72) Erfinder: Weber, Otto, Dipl.-Ing., D-38444 Wolfsburg (DE); Keck, Volkmar, Dipl.-Ing., D-38440 Wolfsburg (DE); Fritsche, Thomas, Dipl.-Ing., D-38226 Salzgitter (DE); Gottschild, Frank, D-38446 Wolfsburg (DE)
(74) Vertreter: Gulde, Klaus W., Dipl.-Chem.

(56) Entgegenhaltungen:
- EP-A- 0 454 949
- WO-A-98/54693
- DE-A- 4 409 200
- DE-C- 4 317 828
- US-A- 4 821 841
- PATENT ABSTRACTS OF JAPAN vol. 014, no. 260 (P-1056), 5. Juni 1990 (1990-06-05) -& JP 02 071300 A (TOUSHIYOU ENG KK;OTHERS: 01), 9. März 1990 (1990-03-09)

## Beschreibung

Die Erfindung betrifft ein luftschallabsorbierendes Formteil mit den im Oberbegriff des Anspruchs 1 genannten Merkmalen sowie seine Verwendung .

Formteile der gattungsgemäßen Art sind bekannt. Diese werden beispielsweise im Maschinenbau, insbesondere im Kraftfahrzeugbau, eingesetzt, um eine Geräuschdämmung zu erreichen. Im Kraftfahrzeugbau werden derartige Formteile als Auskleidungen von Karosserieteilen, beispielsweise Motorhauben, eingesetzt.

Aus der DE 40 11 705 C2 ist ein luftschallabsorbierendes Formteil bekannt, das eine Mehrzahl, parallel angeordneter Helmholtz-Resonatoren mit verschiedenen Resonanzfrequenzen aufweist, und die, die Helmholtz-Resonatoren tragende Fläche des Formteils als Platten-Absorber ausgelegt ist. Durch eine derartige Kombination von Helmholtz-Resonatoren und Platten-Absorbern lässt sich eine Erhöhung eines Absorptionsgrades erzielen.

Aus der DE 43 17 828 C1 ist ein weiteres luftschallabsorbierendes Formteil bekannt, bei dem in Reihe angeordnete Kammern vorgesehen sind, die hermetisch abgeschlossene Hohlräume begrenzen. Hierdurch soll eine verbesserte Luftschallabsorbierung in einem breiteren Frequenzbereich erzielt werden.

Die JP 02 071300 A beschreibt ein luftschallabsorbierendes Formteil, das eine Vielzahl parallel angeordneter Helmholtz-Resonatoren mit Hohlräumen aufweist, wobei die Hohlräume über eine Öffnung der Schallquelle zugewandt sind. In dem Hohlraum eines jeden Helmholtz-Resonators ist eine eine zweite Öffnung aufweisende Zwischenwand ausgebildet, so dass eine Doppelkammer entsteht. Hierdurch bildet jede Doppelkammer quasi in Reihe geschaltete Helmholtz-Resonatoren unterschiedlicher Resonanzfrequenz aus.

Der Erfindung liegt die Aufgabe zugrunde, ein luftschallabsorbierendes Formteil der gattungsgemäßen Art zu schaffen, das einfach aufgebaut ist und sich gegenüber den bekannten luftschallabsorbierenden Formteilen durch ein verbessertes Absorptionsverhalten gegenüber breitbandigem Luftschall auszeichnet.

Erfindungsgemäß wird diese Aufgabe durch ein luftschallabsorbierendes Formteil mit den im Anspruch 1 genannten Merkmalen gelöst. Dadurch, dass dem wenigstens einen, die Öffnung aufweisenden Hohlraum eine, eine Doppelkammer ausbildende Zwischenwand zugeordnet ist, und in der Zwischenwand eine weitere Öffnung angeordnet ist, lässt sich in einfacher Weise eine Reihenschaltung von Helmholtz-Resonatoren erzielen, die zu einem besonders effektiven Absorptionsverhalten bei breitbandigem Luftschall führen. Insbesondere durch einfache Variation der Volumina der beiden Kammern der Doppelkammer lässt sich ein optimales Absorptionsverhalten erzielen, das in einfacher Weise auf unterschiedliche Frequenzbereiche einstellbar ist. Da bekanntermaßen ausschließlich das Volumen von Helmholtz-Resonatoren deren Resonanz-Eigenschaften bestimmt, lassen sich durch Variation der Anordnung der Zwischenwand in einfacher Weise in Reihe geschaltete Helmholtz-Resonatoren mit unterschiedlichen Volumina und somit unterschiedlichen Resonanzfrequenz-Eigenschaften erzielen. Erfindungsgemäß ist weiterhin vorgesehen, dass Wandabschnitte der Innenseite des Formteiles, die zwischen den Hohlräumen (den Helmholtz-Resonatoren) angeordnet sind oder Böden des wenigstens einen die Öffnung aufweisenden Hohlraumes ausbilden, als Platten-Absorber ausgebildet sind, indem Übergangsbereiche zwischen den als Platten-Absorber ausgebildeten Wandabschnitten und den die Hohlräume bildenden Wandelementen als Federelemente ausgebildet sind. Hierdurch lässt sich eine weitere Verbesserung des Absorptionsverhaltens des Formteiles erzielen.

In bevorzugter Ausgestaltung der Erfindung ist vorgesehen, dass mehrere, die in Reihe geschalteten Helmholtz- Resonatoren aufweisende Hohlräume parallel zueinander in dem Formteil angeordnet sind. Somit lässt sich ein besonders gutes Absorptionsverhalten erzielen. Vor allem, wenn benachbarte in Reihe geschaltete Helmholtz-Resonatoren jeweils unterschiedliche Volumina aufweisen, lassen sich bei breitbandigem Luftschall optimale Absorptionseigenschaften für unterschiedliche Frequenzbereiche in einfacher Weise erzielen.

Darüber hinaus ist in bevorzugter Ausgestaltung der Erfindung vorgesehen, dass in Übergangsbereichen zwischen den Platten-Absorbern und den in Reihe geschalteten Helmholtz-Resonatoren dünnerwandige Wandabschnitte vorgesehen sind. Hierdurch wird vorteilhaft erreicht, dass die Schwingfähigkeit der Platten-Absorber erhöht wird, so dass deren Absorptionseigenschaften verbessert sind.

In weiterer bevorzugter Ausgestaltung der Erfindung ist vorgesehen, dass das luftschallabsorbierende Formteil aus einem Kunststoffmaterial, insbesondere aus einem polymeren Material, besteht, so dass sich dieses in einfacher Weise, beispielsweise durch Extrudieren, Tiefziehen, Blasformen oder dergleichen, herstellen lässt.

Ferner ist in bevorzugter Ausgestaltung der Erfindung vorgesehen, dass das luftschallabsorbierende Formteil als Verkleidungselement einer Motorhaube eines Kraftfahrzeuges eingesetzt wird. Hierdurch lässt sich der durch den Betrieb des Kraftfahrzeuges, insbesondere einer Verbrennungskraftmaschine des Kraftfahrzeuges, entstehende breitbandige Luftschall mit großer Effizienz absorbieren, so daß eine Geräuschentwicklung, vor allem für Fahrzeuginsassen und die Umwelt, reduzierbar ist.

Weitere bevorzugte Ausgestaltungen der Erfindung ergeben sich aus den übrigen, in den Unteransprüchen genannten Merkmalen.

Die Erfindung wird nachfolgend in Ausführungsbeispielen anhand der zugehörigen Zeichnungen näher erläutert. Es zeigen:
- Figur 1: einen Querschnitt durch ein luftschallabsorbierendes Formteil;
- Figur 2: einen Querschnitt durch ein luftschallabsorbierendes Formteil in einer zweiten Ausführungsvariante;
- Figur 3: eine schematische Perspektivansicht einer Motorhaube eines Kraftfahrzeuges und
- Figur 4: eine schematische Ansicht einer Schallschutzkapsel für eine Verbrennungskraftmaschine.

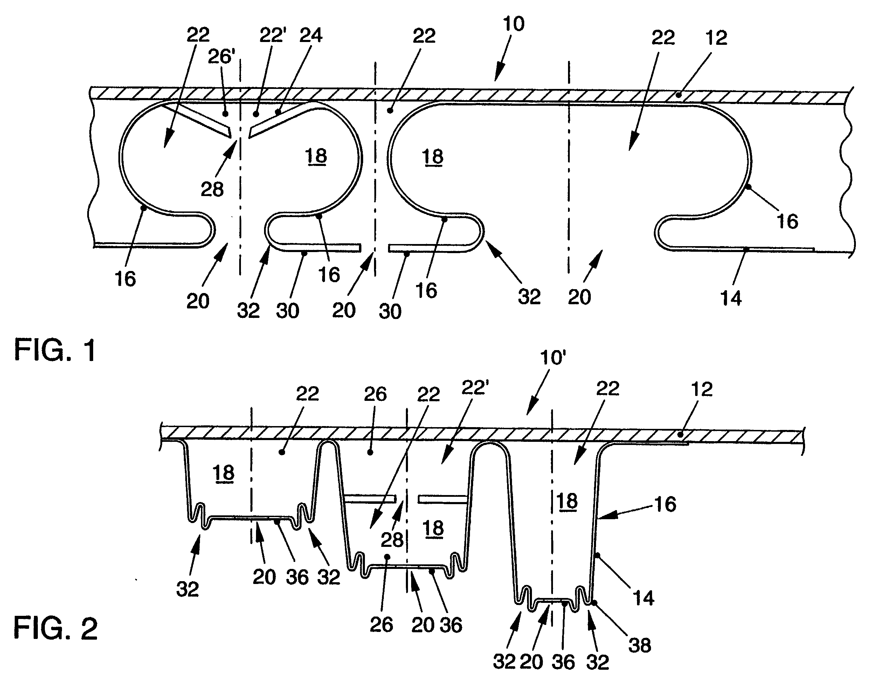

Figur 1 zeigt ausschnittsweise eine Schnittdarstellung durch ein insgesamt mit 10 bezeichnetes luftschallabsorbierendes Formteil. Das Formteil 10 besitzt eine Außenseite 12 sowie eine Innenseite 14. Während des bestimmungsgemäßen Einsatzes des Formteiles 10 ist die Innenseite 14 einer Schallquelle zugewandt, deren breitbandiger Luftschall zu absorbieren ist. Die Innenseite 14 ist mit der Außenseite 12 über Wandelemente 16 derart verbunden, daß es zur Ausbildung von Hohlräumen 18 kommt. Die Innenseite 14 besitzt Öffnungen 20, über die die Hohlräume 18 in Richtung der nicht dargestellten Schallquelle offen sind. Durch eine derartige Ausgestaltung kommt es in allgemein bekannter Weise zur Ausbildung von Helmholtz-Resonatoren 22. Aufbau, Funktion und Wirkungsweise von Helmholtz-Resonatoren sind allgemein bekannt, so daß im Rahmen der vorliegenden Beschreibung hierauf nicht näher eingegangen werden soll.

Innerhalb des in Figur 1 links dargestellten Helmholtz-Resonators 22 ist eine Zwischenwand 24 vorgesehen, die den Hohlraum 18 in eine, zwei Kammern 26 beziehungsweise 26' aufweisende Doppelkammer unterteilt. Die Zwischenwand 24 besitzt eine Öffnung 28, wodurch es innerhalb der Kammer 26' zur Ausbildung eines Helmholtz-Resonators 22' kommt. Hierdurch ist quasi eine Reihenschaltung eines Helmholtz-Resonators 22 und eines Helmholtz-Resonators 22' gebildet. Diese Reihenschaltung der Helmholtz-Resonatoren 22, 22' gestattet es, auf einer zur Verfügung stehenden Grundfläche Helmholtz-Resonatoren mit unterschiedlichen Volumina zur Verfügung zu stellen. Hierbei kommt es zur Ausbildung eines ersten Helmholtz-Resonators über die Öffnung 20 und den Hohlraum 18, zur Ausbildung eines zweiten Helmholtz-Resonators über die Öffnung 20 und die Kammer 26 und zur Ausbildung eines dritten Helmholtz-Resonators über die Öffnung 28 und die Kammer 26'. Durch Variationen der Anordnung der Zwischenwand 24, der Durchmesser der Öffnungen 20 beziehungsweise 28 lassen sich unterschiedliche Absorptionseigenschaften einstellen.

Anhand des in Figur 1 rechts dargestellten Helmholtz-Resonators 22 soll verdeutlicht werden, daß zwischen zwei Helmholtz-Resonatoren 22 verlaufende Wandabschnitte 30 der Innenseite 14 eine größere Materialstärke aufweisen als die Wandelemente 16. Hierdurch kommt es im Übergangsbereich zwischen den Wandabschnitten 30 und den Wandelementen 16 zur Ausbildung eines Federelementes 32. Die Federelemente 32 führen dazu, daß die Wandabschnitte 30 zwischen benachbarten Helmholtz-Resonatoren 22 als Platten-Absorber wirken, deren Schwingungsverhalten entsprechend dem Verhältnis der Materialdicke zwischen den Wandabschnitten 30 und den Wandelementen 16 einstellbar ist. Aufbau und Wirkungsweise von Platten-Absorbern sind ebenfalls allgemein bekannt, so daß im Rahmen der vorliegende Beschreibung hierauf nicht näher eingegangen werden soll.

Anhand der Darstellung in Figur 1 wird deutlich, daß trotz eines einfachen Grundaufbaus des Formteiles 10 durch Abwandlung einzelner Bereiche, beispielsweise der Wandelemente 16, der Wandabschnitte 30, der Öffnungen 20 und/oder 28 sowie das Einfügen von Zwischenwänden 24 und/oder das Ausbilden von Federelementen 32 eine optimale Abstimmung auf unterschiedliche Schallquellen erfolgen kann, so daß auch breitbandiger Luftschall in relativ großen Frequenzbereichen effektiv absorbiert werden kann. Selbstverständlich ist es möglich, alle Helmholtz-Resonatoren und/oder Platten-Absorber 34 gleich aufzubauen. Jedoch können die Effekte verstärkt werden, wenn eine unterschiedliche Ausgestaltung an einem Formteil 10 erfolgt. Die Helmholtz-Resonatoren 22 beziehungsweise 22' und die Platten-Absorber 34 sind hierbei unabhängig voneinander abstimmbar. Dies wird insbesondere durch Variation der Volumina der Hohlräume 18 beziehungsweise der Kammern 26 und 26', der Definition der akustischen Masse in den Hohlräumen 18 durch Wahl einer Größe der Öffnungen 20 beziehungsweise 28 möglich. Ferner kann die Abstimmung der Platten-Absorber durch Wahl der Dicke der Wandabschnitte 30, die die zur Verfügung stehende Masse bestimmen, und durch Einstellen von Kennlinien der Federelemente 32 möglich.

Figur 2 zeigt eine abgewandelte Bauform eines Formteiles 10, wobei gleiche Teile wie in Figur 1 mit gleichen Bezugszeichen versehen und nicht nochmals erläutert sind. Anhand der Figur 2 soll lediglich verdeutlicht werden, daß die Helmholtz-Resonatoren 22 auch dadurch erhältlich sind, daß die Innenseite 14 gleichzeitig die Wandelemente 16 bildet, so daß es quasi zu von der Außenseite 12 abkragenden, topfförmigen Helmholtz-Resonatoren 22 kommt. Durch die topfförmige Ausbildung der Helmholtz-Resonatoren 22 besitzen diese eine Boden 36, innerhalb dem die Öffnungen 20 angeordnet sind. Der Boden 36 geht über die Federelemente 32 in die Wandelemente 16 über. Die Federelemente 32 sind durch einen - im Querschnitt betrachtet - S-förmigen Wandabschnitt 38 gebildet. Durch eine derartige Ausgestaltung wird erreicht, daß der Boden 36 einen Platten-Absorber bildet, dessen Schwingungsverhalten durch die Dicke des Bodens 36 (Masse) und eine Federkennlinie der Federelemente 32 einstellbar ist.

Nach allem wird deutlich, daß das Formteil 10 unterschiedliche Varianten aufweisen kann, wobei die unterschiedlichen Helmholtz-Resonatoren 22 beziehungsweise 22' und Platten-Absorber 34 gemäß den Figuren 1 und 2 einzeln oder in beliebiger Kombination angeordnet sein können. Entscheidend ist, daß der auftretende breitbandige Luftschall, der von wenigstens einer Schallquelle emittiert wird, wirkungsvoll in seinen unterschiedlichen Frequenzen beziehungsweise Frequenzbereichen absorbierbar ist.

Wie den Querschnittsdarstellungen in Figur 1 und Figur 2 ohne weiteres zu entnehmen ist, lassen sich die Formteile 10 in einfacher Weise durch Extrudieren, Spritzguß, Druckguß, Tiefziehen, Blasen oder andere geeignete Verfahren herstellen. Das Formteil 10 besteht vorzugsweise aus einem Kunststoff, wobei sich mittels entsprechender Herstellungsverfahren das Formteil 10 als ein Endlosschlauch herstellen läßt, der die in den Figuren 1 und 2 im Detail dargestellten Funktionsteile aufweist. Dieser Endlosschlauch kann entsprechend dem jeweiligen Anwendungsfall dann auf die notwendige Größe geschnitten werden. Eine Befestigung des Formteiles 10 an einem Träger, beispielsweise der Motorhaube 40 oder der Kapsel 50, kann mittels Kleben, Klemmen oder anderen geeigneten kraftschlüssigen Verfahren erfolgen.

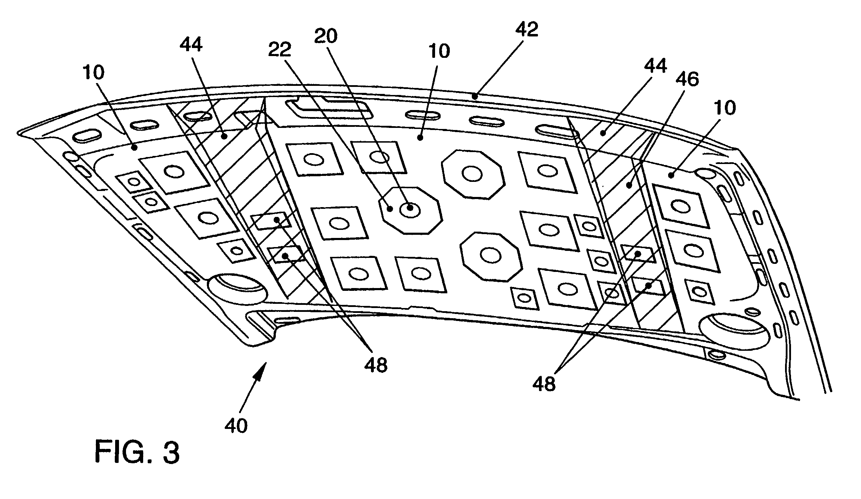

Figur 3 zeigt schematisch in einer Perspektivansicht eine mögliche Anwendung des Formteiles 10. In den Figuren 2 und 3 ist schematisch eine Perspektivansicht einer Motorhaube 40 gezeigt, die an ihrer, der Verbrennungskraftmaschine des Fahrzeuges zugewandten Seite mit dem Formteil 10 ausgekleidet ist. Hierbei ist auf einem, die Motorhaube 40 bildenden Karosserieteil 42 das Formteil 10 mit seiner Rückseite 12 flächig aufgebracht. Das Formteil 10 besitzt eine Vielzahl von Helmholtz-Resonatoren 22, die entweder gemäß den in der Figur 1 gezeigten Ausführungsvarianten und/oder den in der Figur 2 gezeigten Ausführungsvarianten ausgebildet sind. Die in Figur 3 gezeigte Motorhaube 40 ist zusätzlich mit Luftführungen 44 versehen, die von Luftkanälen 46 gebildet sind, die wenigstens eine, hier jeweils zwei Luftaustrittsöffnungen 48 aufweisen, mittels denen Luft in Richtung der Verbrennungskraftmaschine führbar, insbesondere blasbar, ist. Durch die Anordnung der Luftführungselemente 44 ist die Motorhaube 40 in drei Bereiche unterteilt, wobei hier in jedem der drei Bereiche ein Formteil 10 - entsprechend angepaßt - angeordnet ist.

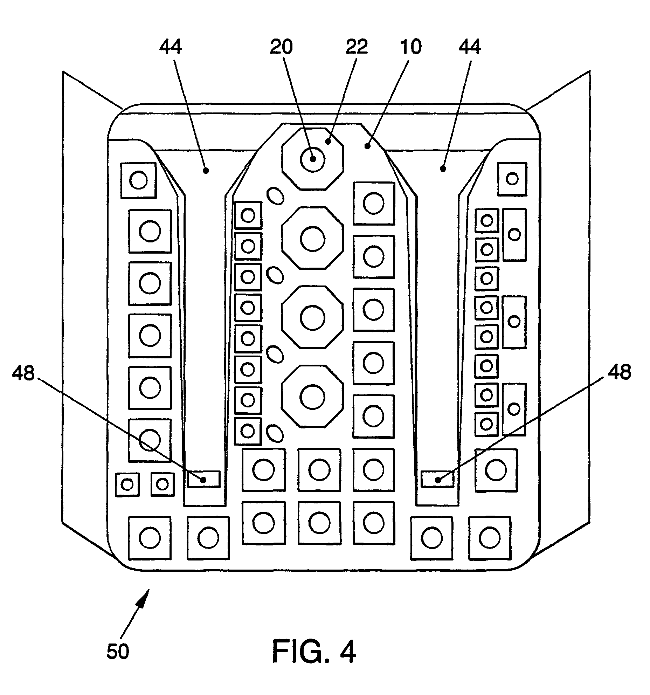

Schließlich zeigt Figur 4 eine weitere Ausführungsvariante, wobei hier eine Kapsel 50 dargestellt ist. Die Kapsel 50 weist an ihrer, der wenigstens einen Schallquelle, beispielsweise der Verbrennungskraftmaschine, zugewandten Seite wiederum wenigstens ein Formteil 10 auf. Dieses Formteil 10 kann wiederum entsprechend den in den vorhergehenden Figuren dargestellten Ausführungsvarianten ausgebildet sein.

## Patentansprüche

1. Luftschallabsorbierendes Formteil (10), mit einer Außenseite (12) und einer, zu wenigstens einer Schallquelle gerichteten Innenseite (14), wobei die Innenseite (14) mit der Außenseite (12) zur Ausbildung von Hohlräumen (18) über Wandelemente (16) miteinander verbunden ist, und die Innenseite (14) wenigstens eine, einem der Hohlräume (18) zugeordnete Öffnung (20) aufweist und wenigstens einer der die Öffnung (20) aufweisenden Hohlräume (18) eine, eine Doppelkammer ausbildende Zwischenwand (24) aufweist, und in der Zwischenwand (24) eine weitere Öffnung (28) angeordnet ist, **dadurch gekennzeichnet, dass** Wandabschnitte (30, 36) der Innenseite (14), die zwischen den Hohlräumen (18) angeordnet sind oder Böden (36) des wenigstens einen die Öffnung (20) aufweisenden Hohlraumes (18) ausbilden, als Platten-Absorber ausgebildet sind, wobei Übergangsbereiche zwischen den als Platten-Absorber ausgebildeten Wandabschnitten (30, 36) und den die Hohlräume (18) bildenden Wandelementen (16) als Federelemente (32) ausgebildet sind.

2. Formteil nach Anspruch 1, **dadurch gekennzeichnet, dass** die Kammern (26, 26') des wenigstens einen Hohlraumes (18) unterschiedliche große Volumina besitzen.

3. Formteil nach einem der vorhergehenden Ansprüche, **dadurch gekennzeichnet, dass** die Öffnung (20) und die weitere Öffnung (28) unterschiedliche Querschnitte aufweisen.

4. Formteil nach einem der vorhergehenden Ansprüche, **dadurch gekennzeichnet, dass** die Öffnung (20) und die weitere Öffnung (28) einen gleichen Querschnitt besitzen.

5. Formteil nach einem der vorhergehenden Ansprüche, **dadurch gekennzeichnet, dass** das Formteil (10) eine Vielzahl von Doppelkammern (26, 26') aufweisenden Hohlräumen (18) aufweist.

6. Formteil nach einem der vorhergehenden Ansprüche, **dadurch gekennzeichnet, dass** die Wandelemente (16) eine geringere Materialstärke aufweisen als die Wandabschnitte (30).

7. Formteil nach einem der vorhergehenden Ansprüche, **dadurch gekennzeichnet, dass** die Wandabschnitte Böden (36) des wenigstens einen die Öffnung (20) aufweisenden Hohlraumes (18) bilden.

8. Formteil nach Anspruch 7, **dadurch gekennzeichnet, dass** die Übergangsbereiche zwischen den als Platten-Absorber ausgebildeten Böden (36) und den die Hohlräume (18) bildenden Wandelementen (16) im Querschnitt S-förmig ausgebildet sind

9. Formteil nach einem der vorhergehenden Ansprüche, **dadurch gekennzeichnet, dass** das Formteil (10) aus einem Kunststoff besteht.

10. Formteil nach Anspruch 9, **dadurch gekennzeichnet, dass** das Formteil (10) aus einem flexiblen Schlauchelement besteht.

11. Verwendung des Formteiles (10) nach einem der Ansprüche 1 bis 10 als Verkleidungselement eines Karosserieteils, insbesondere einer Motorhaube (40) eines Kraftfahrzeuges.

12. Als Verkleidungselemente einer Motorhaube (40) verwendete luftschallabsorbierende Formteile (10) nach einem der Ansprüche 1 bis 10, **dadurch gekennzeichnet, dass** die Formteile (10) mit wenigstens einer Luftführung (44) kombiniert sind, die wenigstens eine Luftaustrittsöffnung (48) aufweisen, mittels der Luft in Richtung einer Verbrennungskraftmaschine führbar ist.

## Claims

1. Formed part (10) for absorbing airborne noise, with an outer side (12) and an inner side (14) facing towards at least one noise source; wherein the inner side (14) is connected to the outer side (12) via wall elements (16) forming hollow cavities (18); wherein the inner side (14) provides at least one opening (20) allocated to one of the hollow cavities (18); wherein at least one of the hollow cavities (18) with the opening (20), provides an intermediate wall (24) thereby forming a double chamber; and wherein a further opening (28) is disposed in the intermediate wall (24),
**characterised in that** wall portions (30, 36) of the inner side (14), that are either arranged between the hollow cavities (18) or form bases (36) of the at least one hollow cavity (18) provided with the opening (20), are designed as panel absorbers, wherein transitional regions between the wall portions (30, 36) designed as panel absorbers and the wall elements (16) forming the hollow cavities (18) are designed as resilient elements (32).

2. Formed part according to claim 1, **characterised in that** the chambers (26, 26') of the at least one hollow cavity (18) provide volumes of a different size.

3. Formed part according to any one of the preceding claims, **characterised in that** the opening (20) and the further opening (28) provide different cross-sections.

4. Formed part according to any one of the preceding claims, **characterised in that** the opening (20) and the further opening (28) provide identical cross-sections.

5. Formed part according to any one of the preceding claims, **characterised in that** the formed part (10) provides a large number of hollow cavities (18) with double chambers (26, 26').

6. Formed part according to any one of the preceding claims, **characterised in that** the wall elements (16) provide a smaller material thickness than the wall portions (30).

7. Formed part according to any one of the preceding claims, **characterised in that** the wall portions form bases (36) of the at least one hollow cavity (18) in which the opening (20) is provided.

8. Formed part according to claim 7, **characterised in that** the transitional regions between the bases (36) designed as panel absorbers and the wall elements (16) forming the hollow cavities (18) are provided with an S-shaped cross section.

9. Formed part according to any one of the preceding claims, **characterised in that** the formed part (10) consists of a synthetic material.

10. Formed part according to claim 9, **characterised in that** the formed part (10) consists of a flexible hose element.

11. Use of the formed part (10) according to any one of claims 1 to 10 as a lining element of a bodywork component, in particular, an engine bonnet (40) of a motor vehicle.

12. Formed parts for absorbing airborne noise (10) used as lining elements for an engine bonnet (40) according to any one of claims 1 to 10,
**characterised in that** the formed parts (10) are combined with at least one air channel (44), which provides at least one air-outlet opening (48), by means of which air can be guided towards a combustion engine.

## Revendications

1. Elément moulé (10) absorbant le son transmis par l'air, comportant une face extérieure (12) et une face intérieure (14) orientée vers au moins une source sonore, la face intérieure (14) étant reliée à la face extérieure (12) par l'intermédiaire d'éléments de paroi (16) afin de former des espaces creux (18), et la face intérieure (14) comportant au moins un orifice (20) associé à l'un des espaces creux (18), au moins l'un des espaces creux (18) comportant l'orifice (20) comportant une cloison de séparation (24) formant une chambre double, et un autre orifice (28) étant pratiqué dans la cloison de séparation (24), **caractérisé en ce que** des tronçons de paroi (30, 36) de la face intérieure (14), disposés entre les espaces creux (18) ou formant des fonds (36) de l'au moins un espace creux (18), sont agencés sous la forme d'absorbeurs à plaque, des zones de transition entre les tronçons de paroi (30, 36) agencés sous la forme d'absorbeurs à plaque et les éléments de paroi (16) formant les espaces creux (18) étant réalisés en tant qu'éléments élastiques (32).

2. Elément moulé selon la revendication 1, **caractérisé en ce que** les chambres (26, 26') de l'au moins un espace creux (18) possèdent des volumes de tailles différentes.

3. Elément moulé selon l'une des revendications précédentes, **caractérisé en ce que** l'orifice (20) et l'autre orifice (28) ont des sections transversales différentes.

4. Elément moulé selon l'une quelconque des revendications précédentes, **caractérisé en ce que** l'orifice (20) et l'autre orifice (28) ont une même section transversale.

5. Elément moulé selon l'une quelconque des revendications précédentes, **caractérisé en ce que** l'élément moulé (10) comporte une pluralité d'espaces creux (18) comportant des chambres doubles (26, 26').

6. Elément moulé selon l'une quelconque des revendications précédentes, **caractérisé en ce que** l'épaisseur du matériau des éléments de paroi (16) est plus faible que celle des tronçons de paroi (30).

7. Elément moulé selon l'une quelconque des revendications précédentes, **caractérisé en ce que** les tronçons de paroi forment des fonds (36) de l'au moins un espace creux (18) comportant les orifices (20).

8. Elément moulé selon la revendication 7, **caractérisé en ce que** les zones de transition entre des tronçons de paroi (30) agencés sous la forme d'absorbeurs à plaque et les éléments de paroi (16) formant les espaces creux (18) sont réalisés avec une section transversale en forme de S.

9. Elément moulé selon l'une quelconque des revendications précédentes, **caractérisé en ce que** l'élément moulé (10) est en matière plastique.

10. Elément moulé selon la revendication 9, **caractérisé en ce que** l'élément moulé (10) est constitué d'un élément de boyau flexible.

11. Utilisation de l'élément moulé (10) selon l'une quelconque des revendications 1 à 10 en tant qu'élément de revêtement d'une pièce de carrosserie, notamment d'un capot de moteur (40) de véhicule automobile.

12. Eléments moulés (10) absorbant le son transmis par l'air selon l'une quelconque des revendications 1 à 10, utilisés en tant qu'éléments de revêtement d'un capot de moteur (40), **caractérisés en ce que** les éléments moulés (10) sont combinés avec au moins un conduit d'air (44), qui comporte au moins un orifice de sortie d'air (48) au moyen duquel l'air peut être dirigé en direction d'un moteur à combustion interne.
